# EUROPÄISCHE PATENTSCHRIFT

(11) **EP 3 110 639 B1**
(45) Veröffentlichungstag und Bekanntmachung des Hinweises auf die Patenterteilung: **24.07.2019**
(21) Anmeldenummer: 15701950.6
(22) Anmeldetag: 20.01.2015
(51) Int. Cl.: B60G 21/055

(54) **STABILISATOR ZUR WANKSTABILISIERUNG EINES FAHRZEUGS UND VERFAHREN ZUM BETREIBEN EINES SOLCHEN STABILISATORS**
ANTI-ROLL BAR FOR THE ROLLING STABILIZATION OF A VEHICLE AND METHOD FOR OPERATING SUCH AN ANTI-ROLL BAR
STABILISATEUR POUR STABILISER LE ROULIS D'UN VÉHICULE AUTOMOBILE ET PROCÉDÉ POU FAIRE FONCTIONNER UN TEL STABILISATEUR

(30) Priorität: 25.02.2014 DE 102014203388
(43) Veröffentlichungstag der Anmeldung: 04.01.2017
(73) Patentinhaber: ZF Friedrichshafen AG, 88046 Friedrichshafen (DE)
(72) Erfinder: FÜSSL, Andreas, 88079 Kressbronn am Bodensee (DE); FREI, Roman, 88048 Friedrichshafen (DE); ENGEL, Joachim, 88677 Markdorf (DE); AMANN, Notker, 88045 Friedrichshafen (DE); ER, Mesut, 88045 Friedrichshafen (DE); MAIR, Ulrich, 88046 Friedrichshafen (DE)
(86) Internationale Anmeldenummer: PCT/EP2015/050990
(87) Internationale Veröffentlichungsnummer: WO 2015/128115

(56) Entgegenhaltungen:
- EP-A1- 1 719 643
- DE-A1-102006 000 408
- JP-A- 2009 040 244
- US-A- 5 060 959
- US-A1- 2012 313 338

## Beschreibung

Die vorliegende Erfindung bezieht sich auf einen Stabilisator zur Wankstabilisierung eines Fahrzeugs, auf ein Verfahren zum Betreiben eines solchen Stabilisators, auf ein entsprechendes Steuergerät sowie auf ein entsprechendes Computerprogrammprodukt.

Mittels einer aktiven Wankstabilisierung eines Fahrzeugs kann der Zielkonflikt zwischen einer hohen Wanksteifigkeit bei Kurvenfahrt und einer Entkopplung der Räder bei einseitiger und wechselseitiger Anregung gelöst werden, was einen Komfort- und Sicherheitsgewinn für einen Fahrzeuglenker bedeutet. Hierbei können passive Stabilisatoren durch aktive Stabilisatoren ersetzt sein. Die aktive Wankstabilisierung umfasst beispielsweise zwei Stabilisatorhälften und ein aktives Element, das ausgebildet ist, um die zwei Stabilisatorhälften aktiv gegeneinander zu verdrehen.

Das aktive Element kann entweder als Hydraulikmotor oder als Elektromotor-Getriebeeinheit realisiert sein. Ein derzeit in Serie befindliches aktives Wankstabilisierungssystem, auch Active Roll System (ARS) genannt, ist beispielsweise mit einem Hydraulikmotor ausgestattet.

Durch die Substitution eines solchen hydraulischen Systems durch einen Elektromotor können sich Vorteile hinsichtlich einer Stelldynamik, eines Verbrauchs und einer Montage im Fahrzeug ergeben.

Die Druckschrift DE 10 2006 000 408 A1 offenbart einen Stabilisator mit einer Stabilisierer-Steuerungsvorrichtung nach dem Oberbegriff des Anspruchs 1.

Die Druckschrift US 50 60 959 A offenbart eine elektrisch angetriebene aktive Aufhängung für ein Fahrzeug.

Die Druckschrift EP 1719643 A1 offenbart ein Stabilisierer-Steuergerät.

Die Druckschrift US 2012/0313338 A1 offenbart ein Stabilisierersystem.

Die Druckschrift JP 2009 040244 A zeigt eine Vektorregelung für die Elektromotoren einer elektrischen Servolenkung und einer direkt zwischen Rad und Aufbau angeordnetem Aktuator in einer Radaufhängung.

Vor diesem Hintergrund schafft die vorliegende Erfindung einen verbesserten Stabilisator zur Wankstabilisierung eines Fahrzeugs, ein Verfahren zum Betreiben eines solchen Stabilisators, ein entsprechendes Steuergerät sowie schließlich ein entsprechendes Computerprogrammprodukt gemäß den Hauptansprüchen. Vorteilhafte Ausgestaltungen ergeben sich aus den Unteransprüchen und der nachfolgenden Beschreibung.

Der vorliegende Ansatz schafft einen Stabilisator zur Wankstabilisierung eines Fahrzeugs, wobei der Stabilisator folgende Merkmale aufweist:
ein erstes Stabilisatorelement und ein zweites Stabilisatorelement, wobei das erste Stabilisatorelement mit einem ersten Radaufhängungselement des Fahrzeugs gekoppelt oder koppelbar ist und das zweite Stabilisatorelement mit einem zweiten Radaufhängungselement des Fahrzeugs gekoppelt oder koppelbar ist; und
zumindest einen Elektromotor, der ausgebildet ist, um zum Entkoppeln des ersten Radaufhängungselements von dem zweiten Radaufhängungselement das erste Stabilisatorelement gegen das zweite Stabilisatorelement unter Verwendung eines Regelungssignals zu verdrehen, wobei das Regelungssignal ein unter Verwendung eines Algorithmus einer feldorientierten Regelung ermitteltes Signal repräsentiert.

Unter einem Fahrzeug kann ein zweispuriges Kraftfahrzeug wie etwa ein Pkw oder ein Lkw verstanden werden. Unter einem Stabilisatorelement kann beispielsweise ein Teil eines zweigeteilten Drehstabs verstanden werden. Das erste Radaufhängungselement kann über den Drehstab mit dem zweiten Radaufhängungselement verbunden sein. Bei dem ersten und dem zweiten Radaufhängungselement kann es sich beispielsweise je um einen Lenker, insbesondere Querlenker, oder ein Federbein des Fahrzeugs handeln. Zwischen dem ersten und dem zweiten Stabilisatorelement kann ein Elektromotor angeordnet sein. Der Elektromotor kann ausgebildet sein, um das erste und das zweite Stabilisatorelement um eine gemeinsame Drehachse, die im Wesentlichen einer Querachse des Fahrzeugs entsprechen kann, in je eine andere Richtung zu verdrehen. Hierbei kann der Elektromotor basierend auf einer feldorientierten Regelung angesteuert werden. Unter einem Algorithmus einer feldorientierten Regelung, auch Vektorregelung genannt, kann ein Algorithmus zur Ausführung eines Regelungskonzepts verstanden werden, bei dem sinusförmige oder annähernd sinusförmige Wechselgrößen wie beispielsweise Wechselspannungen und Wechselströme in Leiterschleifen innerhalb des Elektromotors in einem um einen Phasenwinkel innerhalb einer Periode bereinigten Momentanwert geregelt werden. Hierzu können die erfassten Wechselgrößen je in ein mit einer Frequenz der Wechselgrößen rotierendes Koordinatensystem im Elektromotor übertragen werden, sodass sich aus den Wechselgrößen Gleichgrößen ergeben, auf die beispielsweise Verfahren der Regelungstechnik angewandt werden können.

Der vorliegende Ansatz beruht auf der Erkenntnis, dass ein Stabilisator für ein Fahrzeug einen zweiteiligen Drehstab umfassen kann, dessen Teile mittels eines Elektromotors in eine rotatorische Relativbewegung zueinander versetzt werden können. Durch ein derartiges gegensinniges Verdrehen der beiden Drehstabteile kann eine etwa durch eine einseitige Radhubbewegung des Fahrzeugs in den Drehstab eingeleitete Torsionskraft kompensiert werden, sodass eine Übertragung der Radhubbewegung von der einen Fahrzeugseite auf die andere Fahrzeugseite und somit ein Wanken des Fahrzeugs verhindert wird.

Vorteilhafterweise kann der Elektromotor hierbei ausgebildet sein, um basierend auf einer feldorientierten Regelung oder ein unter Verwendung eines Algorithmus einer feldorientierten Regelung angesteuert zu werden. Dadurch kann erreicht werden, dass der Elektromotor auch noch bei hohen Drehzahlen ein ausreichend hohes Drehmoment aufweist, um schnellen Radhubbewegungen bei hohen Fahrzeuggeschwindigkeiten zu folgen. Vorzugsweise ist dem Elektromotor ein Getriebe, insbesondere ein Planeten-Getriebe, zugeordnet. Bevorzugt sind Elektromotor-Getriebe in einer kompakten Baueinheit untergebracht.

Ferner schafft der vorliegende Ansatz ein Fahrzeug mit zumindest einem Stabilisator gemäß einer hier beschriebenen Ausführungsform. Ein mit einem derartigen Stabilisator ausgestattetes Fahrzeug bietet den Vorteil einer hohen Fahrsicherheit sowie eines hohen Fahrkomforts.

Ein Verfahren zum Betreiben eines Stabilisators gemäß einer hier beschriebenen Ausführungsform umfasst folgende Schritte:
Einlesen eines Hubbewegungssignals, wobei das Hubbewegungssignal eine Hubbewegung des ersten Radaufhängungselements und/oder des zweiten Radaufhängungselements repräsentiert; und
Bereitstellen des Regelungssignals unter Verwendung eines Algorithmus einer feldorientierten Regelung und unter Verwendung des Hubbewegungssignals, um zum Entkoppeln des ersten Radaufhängungselements von dem zweiten Radaufhängungselement ein Verdrehen des ersten Stabilisatorelements gegen das zweite Stabilisatorelement mittels des Elektromotors zu bewirken.

Gemäß einer Ausführungsform des vorliegenden Ansatzes kann im Schritt des Bereitstellens ferner eine d/q-Transformation durchgeführt werden, um das Regelungssignal zu ermitteln. Mittels einer d/q-Transformation können dreiphasige Größen, etwa die Achsen U, V, W bei einer Drehstrommaschine, in ein zweiachsiges Koordinatensystem mit den Achsen d und q überführt werden. Hierbei rotiert das Koordinatensystem mit den aufeinander rechtwinklig stehenden Achsen d und q zusammen mit einem Rotor der Drehstrommaschine. Somit kann bei konstanter Drehzahl des Rotors ein Drehfeld in Form zweier zeitlich konstanter Größen d und q mathematisch beschrieben werden und eine Drehzahl- und Positioniergenauigkeit der Elektromotoransteuerung verbessert werden.

Im Schritt des Einlesens kann ferner ein Rotorwinkelsignal eingelesen werden. Hierbei kann das Rotorwinkelsignal einen Winkel eines Rotors des Elektromotors repräsentieren. Schließlich kann im Schritt des Bereitstellens die d/q-Transformation unter Verwendung des Rotorwinkelsignals durchgeführt werden. Mittels des Rotorwinkelsignals kann eine genaue Lage des Rotors ermittelt werden, um sicherzustellen, dass das d/q-Koordinatensystem mit korrekter Winkelgeschwindigkeit und Phasenlage mit dem Rotor mitrotiert. Beispielsweise kann das Rotorwinkelsignal mittels an dem Elektromotor angebrachter Sensoren wie etwa Hall- oder optischer Sensoren erfasst werden. Alternativ kann das Rotorwinkelsignal auch sensorlos durch Rückkopplungen wie die Auswertung einer elektromotorischen Kraft an einer Statorwicklung gewonnen werden.

Eine weitere Ausführungsform des vorliegenden Ansatzes sieht vor, dass im Schritt des Bereitstellens das Regelungssignal ferner unter Verwendung eines Drehmoments und/oder einer elektrischen Flussdichte des Elektromotors ermittelt wird. Alternativ oder zusätzlich kann das Regelungssignal unter Verwendung eines Zusammenhangs zwischen dem Drehmoment und der elektrischen Flussdichte ermittelt werden. Beispielsweise können das Drehmoment und die elektrische Flussdichte mittels der Achsen d und q der d/q-Transformation abgebildet sein und mittels eines PI-Reglers modelliert sein.

Ferner kann im Schritt des Bereitstellens das Regelungssignal basierend auf einem Beobachtersystem ermittelt werden. Unter einem Beobachtersystem kann ein mathematisches System verstanden werden, das ausgebildet ist, um aus bekannten Ein- und Ausgangsgrößen eines beobachteten Referenzsystems nicht messbare Größen (beispielsweise als virtuelle Regelungsgrößen) zu rekonstruieren. Ein solches Beobachtersystem kann als innerer Regelkreis fungieren, um Abweichungen zwischen einem idealen Modell und einem realen Zustand des Elektromotors zu korrigieren. Beispielsweise kann es sich bei dem Beobachtersystem um einen Luenberger-Beobachter (nach der Theorie von David Luenberger, beruhend auf einer Parallelschaltung des Beobachters zum Regelstreckenmodell) handeln. Somit kann eine hohe Genauigkeit bei der Erfassung eines Drehwinkels oder einer Geschwindigkeit des Rotors erreicht werden.

Schließlich schafft der vorliegende Ansatz ein Steuergerät, das ausgebildet ist, um alle Schritte eines Verfahrens gemäß einer der hier beschriebenen Ausführungsformen durchzuführen.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine schematische Darstellung eines Fahrzeugs mit einem Stabilisator gemäß einem Ausführungsbeispiel der vorliegenden Erfindung;
- Fig. 2: eine schematische Darstellung eines Fahrzeugs mit einem herkömmlichen Stabilisator bei einer Kurvenfahrt;
- Fig. 3: eine schematische Darstellung eines herkömmlichen Stabilisators zur hydraulischen Wankstabilisierung;
- Fig. 4: eine schematische Darstellung eines Hydraulikmotors zur Verwendung in einem herkömmlichen Stabilisator zur hydraulischen Wankstabilisierung;
- Fig. 5: eine schematische Darstellung eines Stabilisators gemäß einem Ausführungsbeispiel der vorliegenden Erfindung;
- Fig. 6: ein Diagramm zur Darstellung einer Kennlinie eines Elektromotors mit Brushless-DC-Ansteuerung;
- Fig. 7: ein Diagramm zur Darstellung einer Kennlinie eines Elektromotors mit FOR-Ansteuerung gemäß einem Ausführungsbeispiel der vorliegenden Erfindung;
- Fig. 8: ein Ablaufdiagramm eines Verfahrens zum Betreiben eines Stabilisators gemäß einem Ausführungsbeispiel der vorliegenden Erfindung; und
- Fig. 9: ein Blockschaltbild eines Steuergeräts zum Durchführen eines Verfahrens zum Betreiben eines Stabilisators gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

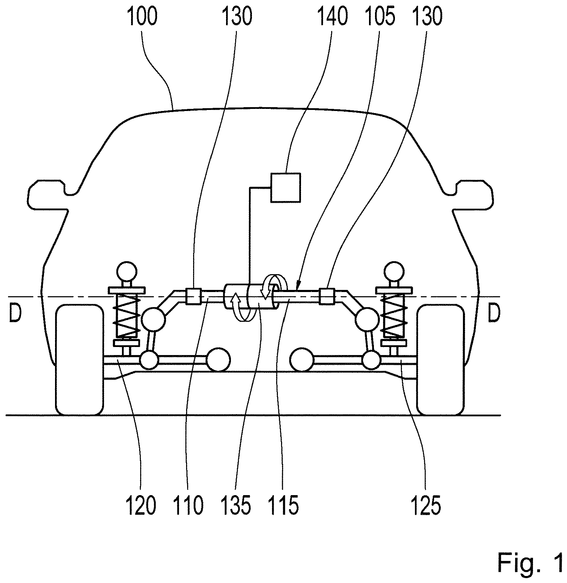

Fig. 1 zeigt eine schematische Darstellung eines Fahrzeugs 100 mit einem Stabilisator 105 gemäß einem Ausführungsbeispiel der vorliegenden Erfindung. Der Stabilisator 105 ist als zweigeteilter Drehstab mit einem ersten Stabilisatorelement 110 und einem zweiten Stabilisatorelement 115 realisiert. Hierbei ist ein Ende des ersten Stabilisatorelements 110 mit einem ersten Radaufhängungselement 120 des Fahrzeugs 100 verbunden und ein Ende des zweiten Stabilisatorelements 115 mit einem zweiten Radaufhängungselement 125 des Fahrzeugs 100 verbunden. Beispielsweise sind die Enden der Stabilisatorelemente 110, 115 hierbei als gelenkig gelagerte Pendelstützen ausgeführt. Bei den Radaufhängungselementen 120, 125 handelt es sich beispielsweise um gegenüberliegende Querlenker des Fahrzeugs 100. Die Stabilisatorelemente 110, 115 sind je mittels eines Aufbaulagers 130 um eine gemeinsame Drehachse D-D drehbar an einem Fahrgestell des Fahrzeugs 100 befestigt. Die Drehachse D-D entspricht hierbei beispielhaft einer Querachse des Fahrzeugs 100.

Je ein einer Fahrzeugmitte des Fahrzeugs 100 zugewandtes Ende der Stabilisatorelemente 110, 115 ist mit einem gemeinsamen Elektromotor 135 als Aktuator mechanisch gekoppelt. Der Elektromotor 135 ist ausgebildet, um unter Verwendung eines Regelungssignals die Stabilisatorelemente 110, 115 in je eine andere Richtung um die Drehachse D-D zu verdrehen. Hierbei repräsentiert das Regelungssignal ein basierend auf einer feldorientierten Regelung ermitteltes Signal. Durch das gegensinnige Verdrehen der Stabilisatorelemente 110, 115 werden die Radaufhängungselemente 120, 125 quasi mechanisch voneinander entkoppelt.

Gemäß einem Ausführungsbeispiel der vorliegenden Erfindung ist das Fahrzeug 100 mit einer Vorrichtung 140 ausgestattet, die an den Elektromotor 135 angeschlossen ist und ausgebildet ist, um das Regelungssignal bereitzustellen.

Der Komfort eines Fahrzeugs kann unter anderem von einem sogenannten Kopierverhalten abhängig sein. Kopieren bedeutet, dass eine Radhubbewegung der einen Fahrzeugseite durch eine Kopplung der beiden Räder mittels eines Stabilisators auf ein Rad der anderen Fahrzeugseite übertragen wird. Dadurch kann das Fahrzeug zum Wanken angeregt werden, was zu Komforteinbußen führen kann.

Um ein solches Wanken zu vermeiden, kann sowohl ein hydraulisches als auch ein elektromechanisches Wankstabilisatorsystem ausgebildet sein, um beide Radseiten gänzlich voneinander zu entkoppeln.

Die beiden Stabilisatorhälften 110, 115 des elektromechanischen Systems sind beispielsweise über ein Planeten-Getriebe und den Elektromotor 135 miteinander gekoppelt. Wird nun ein Rad einseitig durch einen vertikalen Hub angeregt, etwa beim Überfahren einer Bodenunebenheit, so sollte der Elektromotor 135 der Radbewegung möglichst schnell folgen, um beide Räder voneinander zu entkoppeln. Herkömmliche aktive Systeme weisen dazu beispielsweise einen möglichst weich ausgelegten Stabilisator auf.

Hierbei wird ein Grad der Weichheit des Stabilisators beispielsweise durch den Stabilisator selbst oder durch ein zusätzliches Bauteil wie etwa einem Gummielement in einem Stabilisatorrücken oder einem Anlenkungshebel des Stabilisators eingestellt.

Die dynamischen Anteile der Radhubbewegung können von einem derart weich ausgelegten Stabilisator absorbiert werden, sodass diese Bewegungsanteile nicht bis zum Elektromotor gelangen.

Bei Kurvenfahrt hingegen kann ein solcher Stabilisator bewirken, dass die von einem Verstellsystem eingeleitete Bewegung verzögert an das Rad weitergegeben wird.

Ein sehr steifer Stabilisator kann bewirken, dass die Verstellbewegung direkt an das Rad weitergegeben wird und eine somit entstehende Wankbewegung bei Kurvenfahrt des Fahrzeugs bereits im Ansatz eliminiert wird.

Eine Verwendung eines weichen Stabilisators oder entsprechender beispielsweise aus Gummi gefertigter Elemente im Stabilisatorrücken und/oder in einem Stabilisatorschenkel oder eine spezielle Ausgestaltung des Stabilisators kann mit einem hohen Zusatzaufwand verbunden sein, insbesondere hinsichtlich einer Montage und einer Dauerhaltbarkeit. Ferner können beispielsweise zusätzliche, der Verbindung dienende Schnittstellen zwischen einem Zusatzelement und dem Stabilisator erforderlich sein. Um die Dauerhaltbarkeit des Stabilisators sicherzustellen, sollte der Stabilisator eine Mindesthärte aufweisen, d. h., ein bestimmter Durchmesser des Stabilisators sollte nicht unterschritten werden.

Um diese Problematik zu umgehen, weist eine elektrische Wankstabilisierung gemäß einem Ausführungsbeispiel der vorliegenden Erfindung einen Elektromotor 135 mit einer feldorientierten Ansteuerung auf. Somit kann über einen hohen Drehzahlbereich ein ausreichendes Beschleunigungsmoment zur Verfügung gestellt werden.

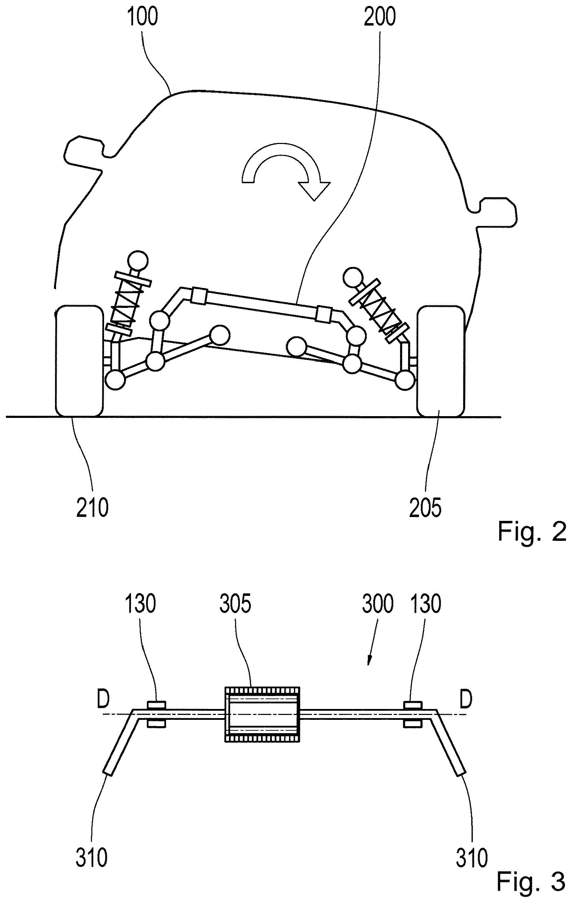

Fig. 2 zeigt eine schematische Darstellung eines Fahrzeugs 100 mit einem herkömmlichen Stabilisator 200 bei einer Kurvenfahrt. Im Gegensatz zu Fig. 1 ist das in Fig. 2 dargestellte Fahrzeug 100 mit einem als einteiligen Drehstab realisierten Stabilisator 200 ohne Elektromotor ausgestattet. Die Karosserie des Fahrzeugs 100 neigt sich aufgrund der während der Kurvenfahrt wirkenden Fliehkraft in Richtung einer Kurvenaußenseite, sodass ein kurvenäußeres Rad 205 des Fahrzeugs 100 einfedert.

Durch das Einfedern des kurvenäußeren Rades 205 wird der Stabilisator 200 in eine Drehbewegung versetzt, die bewirkt, dass ein dem kurvenäußeren Rad 205 gegenüberliegend angeordnetes kurveninneres Rad 210 des Fahrzeugs 100 entlastet oder sogar angehoben wird. Dadurch kann ein Neigungswinkel des Fahrzeugs 100 beim Durchfahren der Kurve reduziert werden. Umgekehrt wird das kurveninnere Rad 210 durch eine entgegengesetzte Drehbewegung des Stabilisators 200 abgesenkt, sofern das kurvenäußere Rad 205 wieder ausfedert.

Fig. 3 zeigt eine schematische Darstellung eines herkömmlichen Stabilisators 300 zur hydraulischen Wankstabilisierung. In Fig. 3 ist eine Draufsicht auf den Stabilisator 300 gezeigt. Ähnlich wie der in Fig. 1 gezeigte Stabilisator 100 ist der in Fig. 3 gezeigte Stabilisator 300 als zweigeteilter Drehstab mit zwei Stabilisatorelementen 110, 115 ausgeführt. Im Unterschied zu Fig. 1 weist der Stabilisator 300 statt eines Elektromotors einen Hydraulikmotor 305 zum Verdrehen der beiden Stabilisatorelemente 110, 115 auf. Die Stabilisatorelemente 110, 115 sind je in einem von der Fahrzeugmitte abgewandten Endbereich zu einem Hebel 310 in etwa Fahrzeuglängsrichtung umgebogen, der auch als Stabschenkel bezeichnet werden kann. Die Hebel 310 sind ausgebildet, um je mit den in Fig. 3 nicht dargestellten Radaufhängungselementen verbunden zu werden. Ein sich entlang der Drehachse D-D erstreckender Teilabschnitt des Stabilisators 300 kann auch als Stabilisatorrücken bezeichnet werden. Der Stabilisatorrücken ist mittels der Aufbaulager 130 drehbar um die Drehachse D-D gelagert.

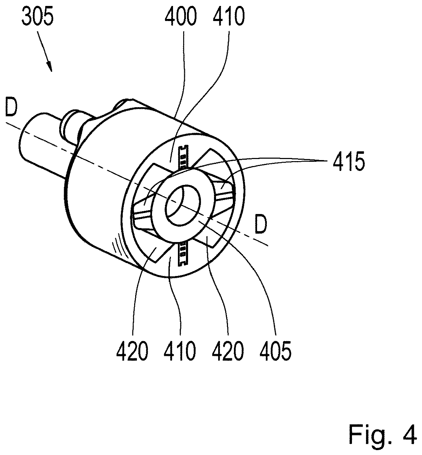

Fig. 4 zeigt eine schematische Darstellung eines Hydraulikmotors 305 zur Verwendung in einem herkömmlichen Stabilisator zur hydraulischen Wankstabilisierung. Der Hydraulikmotor 305 umfasst einen Stator 400 und einen Rotor 405. Der Rotor 405 ist in dem Stator 400 um die Drehachse D-D drehbar angeordnet. Der Stator 400 ist beispielhaft mit zwei Statorflügeln 410 ausgebildet. Der Rotor 405 ist beispielhaft mit zwei Rotorflügeln 415 ausgebildet. In die Statorflügel 410 und die Rotorflügel 415 ist je ein Dichtungselement 420 integriert. Ein Hohlraum zwischen je einem Statorflügel 410 und je einem Rotorflügel 415 fungiert hierbei als Arbeitskammer 420. Der Rotor 405 ist ausgebildet, um mit den in Fig.4 nicht dargestellten Stabilisatorelementen mechanisch gekoppelt zu werden.

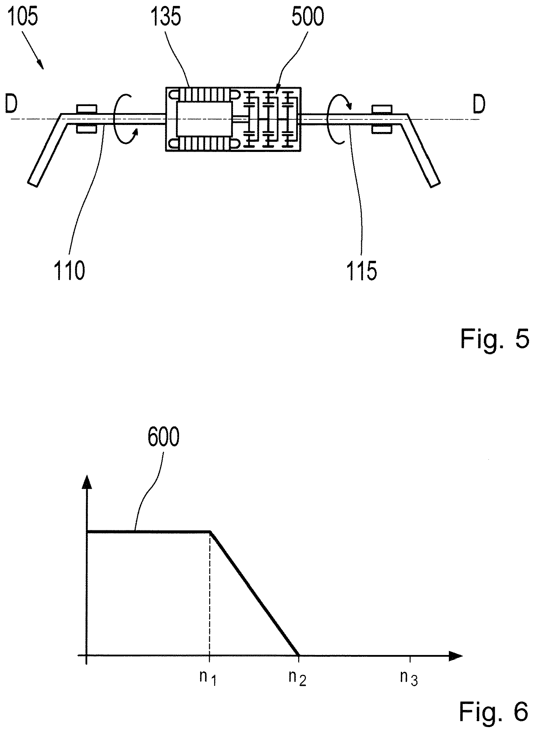

Fig. 5 zeigt eine schematische Darstellung eines Stabilisators 105 gemäß einem Ausführungsbeispiel der vorliegenden Erfindung. In Fig. 5 ist eine Draufsicht auf den Stabilisator 105 gezeigt. Der Stabilisator 105 ist ähnlich dem in Fig. 3 dargestellten Stabilisator 300 aufgebaut. Im Unterschied zu Fig. 1 ist dem in Fig. 5 dargestellten Elektromotor 135 ein Planeten-Getriebe 500 vorgeschaltet. Das Getriebe 500 ist beispielsweise ausgebildet, um eine Drehbewegung eines Rotors des Elektromotors 135 in zwei einander entgegengesetzte Drehbewegungen der Stabilisatorelemente 110, 115 um die Drehachse D-D zu übersetzen.

Fig. 6 zeigt ein Diagramm zur Darstellung einer Kennlinie 600 eines Elektromotors mit Brushless-DC-Ansteuerung (BLDC; "bürstenloser Gleichstrom"). Hierbei bildet eine Ordinate des Diagramms ein Drehmoment des Elektromotors in Newtonmeter und eine Abszisse des Diagramms eine Drehzahl des Elektromotors in Umdrehungen pro Minute ab. Aus dem in Fig. 6 gezeigten Diagramm ist ersichtlich, dass ein Drehmoment des Elektromotors mit zunehmender Drehzahl zunächst konstant ist. Ab einem ersten Leistungseckpunkt, der einer Drehzahl n1 entspricht, fällt das Drehmoment jedoch mit zunehmender Motordrehzahl linear ab. Ab einem zweiten Leistungseckpunkt, der einer Drehzahl n2 entspricht, ist das Drehmoment schließlich gleich null. Dies bedeutet, dass das System ab einer bestimmten Drehzahl kein Beschleunigungsvermögen mehr aufweist, um einer Radbewegung des Fahrzeugs folgen zu können. Somit verhärtet das System und die beiden Räder des Fahrzeugs werden nicht mehr voneinander entkoppelt.

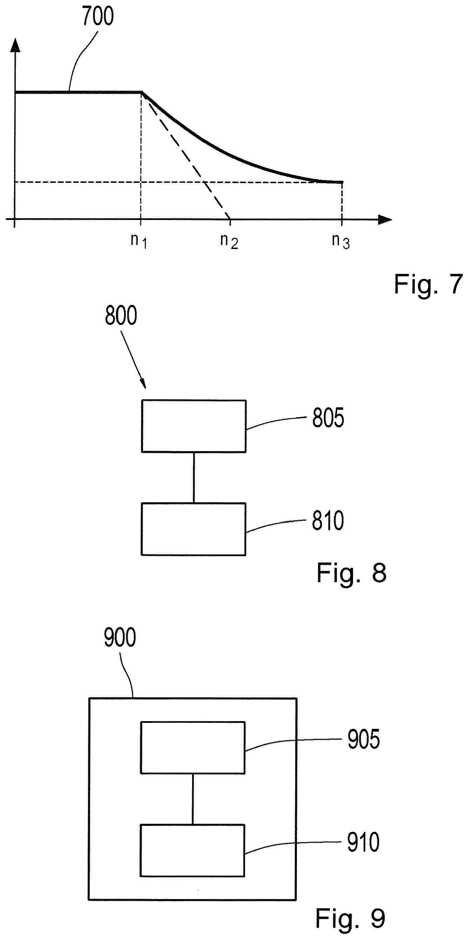

Fig. 7 zeigt ein Diagramm zur Darstellung einer Kennlinie 700 eines Elektromotors mit FOR-Ansteuerung (FOR = feldorientierte Regelung) gemäß einem Ausführungsbeispiel der vorliegenden Erfindung. Bei dem Elektromotor handelt es sich beispielsweise um den in den Figuren 1 und 2 dargestellten Elektromotor 135. Erfolgt die Ansteuerung des Elektromotors durch eine feldorientierte Regelung, so ist aus der entsprechenden Kennlinie 700 ersichtlich, dass der Elektromotor im Vergleich zu der in Fig. 6 gezeigten Brushless-DC-Ansteuerung auch noch bei einer höheren Drehzahl n3 ein Motormoment aufweist. Dadurch können einseitige Radhubbewegungen des Fahrzeugs ausgeglichen werden.

Im Unterschied zu Fig. 6 fällt die Kennlinie 700 mit zunehmender Drehzahl ab dem ersten Leistungseckpunkt nicht linear, sondern annähernd linear bzw. kurvenförmig ab, sodass der Elektromotor ab einem dritten Leistungseckpunkt, der der Drehzahl n3 entspricht, noch ein ausreichend hohes Drehmoment aufweist.

Herkömmliche Wankstabilisierungssysteme weisen oftmals eine Brushless-DC-Ansteuerung auf. Die Ansteuerung eines ERC-Systems (electro-mechanical roll control; "elektromechanische Wankstabilisierung") über eine feldorientierte Regelung bietet im Vergleich zur Brushless-DC-Ansteuerung die Möglichkeit, auch höhere Radanregungspegel, wie sie etwa bei höheren Fahrzeuggeschwindigkeiten auftreten, auszugleichen und somit den Fahrkomfort zu steigern.

Fig. 8 zeigt ein Ablaufdiagramm eines Verfahrens 800 zum Betreiben eines Stabilisators gemäß einem Ausführungsbeispiel der vorliegenden Erfindung. Das Verfahren 800 umfasst einen Schritt 805 des Einlesens eines Hubbewegungssignals, wobei das Hubbewegungssignal eine Hubbewegung des ersten Radaufhängungselements und/oder des zweiten Radaufhängungselements repräsentiert. Ferner umfasst das Verfahren 800 einen Schritt 810 des Bereitstellens des Regelungssignals basierend auf einer feldorientierten Regelung und unter Verwendung des Hubbewegungssignals, um zum Entkoppeln des ersten Radaufhängungselements von dem zweiten Radaufhängungselement das erste Stabilisatorelement gegen das zweite Stabilisatorelement mittels des Elektromotors zu verdrehen.

Fig. 9 zeigt ein Blockschaltbild eines Steuergeräts 900 zum Durchführen eines Verfahrens zum Betreiben eines Stabilisators gemäß einem Ausführungsbeispiel der vorliegenden Erfindung. Bei dem Steuergerät 900 handelt es sich beispielsweise um die in Fig. 1 gezeigte Vorrichtung 140. Das Steuergerät 900 umfasst eine Einleseeinheit 905, die ausgebildet ist, um ein Hubbewegungssignal einzulesen, wobei das Hubbewegungssignal eine Hubbewegung des ersten Radaufhängungselements und/oder des zweiten Radaufhängungselements repräsentiert. Mit der Einleseeinheit 905 ist eine Bereitstellungseinheit 910 verbunden, die ausgebildet ist, um das Regelungssignal basierend auf einer feldorientierten Regelung und unter Verwendung des Hubbewegungssignals bereitzustellen, um zum Entkoppeln des ersten Radaufhängungselements von dem zweiten Radaufhängungselement das erste Stabilisatorelement gegen das zweite Stabilisatorelement mittels des Elektromotors zu verdrehen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 105: Stabilisator
- 110: erstes Stabilisatorelement
- 115: zweites Stabilisatorelement
- 120: erstes Radaufhängungselement
- 125: zweites Radaufhängungselement
- 130: Aufbaulager
- 135: Elektromotor
- 140: Vorrichtung zum Bereitstellen eines Regelungssignals
- 200: herkömmlicher Stabilisator
- 300: Stabilisator zur hydraulischen Wankstabilisierung
- 305: Hydraulikmotor
- 310: Hebel
- 400: Stator
- 405: Rotor
- 410: Statorflügel
- 415: Rotorflügel
- 420: Arbeitskammer
- 500: Getriebe
- 600: Kennlinie eines Elektromotors mit Brushless-DC-Ansteuerung
- 700: Kennlinie eines Elektromotors mit FOR-Ansteuerung
- 800: Verfahren zum Betreiben eines Stabilisators
- 805: Einlesen eines Hubbewegungssignals
- 810: Bereitstellen eines Regelungssignals
- 900: Steuergerät
- 905: Einleseeinheit
- 910: Bereitstellungseinheit

## Patentansprüche

1. Stabilisator (105) zur Wankstabilisierung eines Fahrzeugs (100), wobei der Stabilisator (105) folgende Merkmale aufweist:
ein erstes Stabilisatorelement (110) und ein zweites Stabilisatorelement (115), wobei das erste Stabilisatorelement (110) mit einem ersten Radaufhängungselement (120) des Fahrzeugs (100) gekoppelt oder koppelbar ist und das zweite Stabilisatorelement (115) mit einem zweiten Radaufhängungselement (125) des Fahrzeugs (100) gekoppelt oder koppelbar ist; und
zumindest einen Elektromotor (135), der ausgebildet ist, um zum Entkoppeln des ersten Radaufhängungselements (120) von dem zweiten Radaufhängungselement (125) das erste Stabilisatorelement (110) gegen das zweite Stabilisatorelement (115) unter Verwendung eines Regelungssignals zu verdrehen **dadurch gekennzeichnet, dass**
das Regelungssignal ein unter Verwendung eines Algorithmus einer Vektorregelung ermitteltes Signal repräsentiert.

2. Fahrzeug (100) mit zumindest einem Stabilisator (105) gemäß Anspruch 1.

3. Verfahren (800) zum Betreiben eines Stabilisators (105) gemäß Anspruch 1, wobei das Verfahren (800) folgende Schritte umfasst:
Einlesen (805) eines Hubbewegungssignals, wobei das Hubbewegungssignal eine Hubbewegung des ersten Radaufhängungselements (120) und/oder des zweiten Radaufhängungselements (125) repräsentiert; und
Bereitstellen (810) des Regelungssignals unter Verwendung eines Algorithmus einer Vektorregelung und unter Verwendung des Hubbewegungssignals, um zum Entkoppeln des ersten Radaufhängungselements (120) von dem zweiten Radaufhängungselement (125) ein Verdrehen des ersten Stabilisatorelements (110) gegen das zweite Stabilisatorelement (115) mittels des Elektromotors (135) zu bewirken.

4. Verfahren (800) gemäß Anspruch 3, **dadurch gekennzeichnet, dass** im Schritt (810) des Bereitstellens ferner eine d/q-Transformation durchgeführt wird, um das Regelungssignal zu ermitteln.

5. Verfahren (800) gemäß Anspruch 4, **dadurch gekennzeichnet, dass** im Schritt (805) des Einlesens ferner ein Rotorwinkelsignal eingelesen wird, wobei das Rotorwinkelsignal einen Winkel eines Rotors des Elektromotors (135) repräsentiert, wobei im Schritt (810) des Bereitstellens die d/q-Transformation unter Verwendung des Rotorwinkelsignals durchgeführt wird.

6. Verfahren (800) gemäß einem der Ansprüche 3 bis 5, **dadurch gekennzeichnet, dass** im Schritt (810) des Bereitstellens das Regelungssignal ferner unter Verwendung eines Drehmoments und/oder einer elektrischen Flussdichte des Elektromotors (135) und/oder unter Verwendung eines Zusammenhangs zwischen dem Drehmoment und der elektrischen Flussdichte ermittelt wird.

7. Verfahren (800) gemäß einem der Ansprüche 3 bis 6, **dadurch gekennzeichnet, dass** im Schritt (810) des Bereitstellens das Regelungssignal ferner basierend auf einem Beobachtersystem ermittelt wird.

8. Steuergerät (900), das ausgebildet ist, um alle Schritte eines Verfahrens (800) gemäß einem der Ansprüche 3 bis 7 durchzuführen und/oder anzusteuern.

9. Computerprogramm, das dazu eingerichtet ist, alle Schritte eines Verfahrens (800) gemäß einem der Ansprüche 3 bis 7 durchzuführen.

10. Maschinenlesbares Speichermedium mit einem darauf gespeicherten Computerprogramm nach Anspruch 9.

## Claims

1. Stabilizer (105) for the roll stabilization of a vehicle (100), wherein the stabilizer (105) has the following features:
a first stabilizer element (110) and a second stabilizer element (115), wherein the first stabilizer element (110) is or can be coupled to a first wheel suspension element (120) of the vehicle (100), and the second stabilizer element (115) is or can be coupled to a second wheel suspension element (125) of the vehicle (100); and
at least one electric motor (135) which is designed to rotate the first stabilizer element (110) relative to the second stabilizer element (115) using a control signal in order to decouple the first wheel suspension element (120) from the second wheel suspension element (125),
**characterized in that** the control signal represents a signal determined using an algorithm of a vector control.

2. Vehicle (100) having at least one stabilizer (105) according to Claim 1.

3. Method (800) for operating a stabilizer (105) according to Claim 1, wherein the method (800) comprises the following steps:
reading in (805) a vertical movement signal, wherein the vertical movement signal represents a vertical movement of the first wheel suspension element (120) and/or of the second wheel suspension element (125); and
providing (810) the control signal using an algorithm of a vector control and using the vertical movement signal in order to bring about a rotation of the first stabilizer element (110) relative to the second stabilizer element (115) by means of the electric motor (135) in order to decouple the first wheel suspension element (120) from the second wheel suspension element (125).

4. Method (800) according to Claim 3, **characterized in that** a d/q transformation is also carried out in the providing step (810) in order to determine the control signal.

5. Method (800) according to Claim 4, **characterized in that** a rotor angle signal is also read in in the reading-in step (805), wherein the rotor angle signal represents an angle of a rotor of the electric motor (135), wherein, in the providing step (810), the d/q transformation is carried out using the rotor angle signal.

6. Method (800) according to one of Claims 3 to 5, **characterized in that**, in the providing step (810), the control signal is also determined using a torque and/or an electric flux density of the electric motor (135) and/or using a relationship between the torque and the electric flux density.

7. Method (800) according to one of Claims 3 to 6, **characterized in that**, in the providing step (810), the control signal is also determined on the basis of an observer system.

8. Control device (900) which is designed to carry out and/or to control all the steps of a method (800) according to one of Claims 3 to 7.

9. Computer program which is designed to carry out all the steps of a method (800) according to one of Claims 3 to 7.

10. Machine-readable storage medium having a computer program according to Claim 9 stored thereon.

## Revendications

1. Stabilisateur (105) servant à stabiliser le roulis d'un véhicule (100), le stabilisateur (105) présentant les caractéristiques suivantes :
un premier élément de stabilisateur (110) et un deuxième élément de stabilisateur (115),
le premier élément de stabilisateur (110) étant ou pouvant être accouplé à un premier élément de suspension de roue (120) du véhicule (100) et le deuxième élément de stabilisateur (115) étant ou pouvant être accouplé à un deuxième élément de suspension de roue (125) du véhicule (100) ; et
au moins un moteur électrique (135), lequel est conçu pour, afin de désaccoupler le premier élément de suspension de roue (120) du deuxième élément de suspension de roue (125), faire tourner le premier élément de stabilisateur (110) par rapport au deuxième élément de stabilisateur (115) en utilisant un signal de commande, **caractérisé en ce que**
le signal de commande représente un signal déterminé en utilisant un algorithme d'une commande vectorielle.

2. Véhicule (100) comprenant au moins un stabilisateur (105) selon la revendication 1.

3. Procédé (800) permettant de faire fonctionner un stabilisateur (105) selon la revendication 1, le procédé (800) comportant les étapes suivantes :
lecture (805) d'un signal de mouvement de va-et-vient, le signal de mouvement de va-et-vient représentant un mouvement de va-et-vient du premier élément de suspension de roue (120) et/ou du deuxième élément de suspension de roue (125) ; et
production (810) du signal de commande en utilisant un algorithme d'une commande vectorielle et en utilisant le signal de mouvement de va-et-vient, afin de, pour désaccoupler le premier élément de suspension de roue (120) du deuxième élément de suspension de roue (125), provoquer une rotation du premier élément de stabilisateur (110) par rapport au deuxième élément de stabilisateur (115) au moyen du moteur électrique (135).

4. Procédé (800) selon la revendication 3, **caractérisé en ce qu'**à l'étape (810) de production, une transformée d-q est en outre effectuée, afin de déterminer le signal de commande.

5. Procédé (800) selon la revendication 4, **caractérisé en ce qu'**à l'étape (805) de lecture, un signal d'angle de rotor est en outre lu, le signal d'angle de rotor représentant un angle d'un rotor du moteur électrique (135), la transformée d-q étant effectuée en utilisant le signal d'angle de rotor à l'étape (810) de production.

6. Procédé (800) selon l'une des revendications 3 à 5, **caractérisé en ce qu'**à l'étape (810) de production, le signal de commande est en outre déterminé en utilisant un couple et/ou une densité de flux électrique du moteur électrique (135) et/ou en utilisant une relation entre le couple et la densité de flux électrique.

7. Procédé (800) selon l'une des revendications 3 à 6, **caractérisé en ce qu'**à l'étape (810) de production, le signal de commande est en outre déterminé sur la base d'un système d'observation.

8. Appareil de commande (900), lequel est conçu pour mettre en oeuvre et/ou commander toutes les étapes d'un procédé (800) selon l'une des revendications 3 à 7.

9. Programme informatique qui est conçu pour mettre en oeuvre toutes les étapes d'un procédé (800) selon l'une des revendications 3 à 7.

10. Support d'informations lisible par machine doté d'un programme informatique, enregistré sur celui-ci, selon la revendication 9.
